# EUROPÄISCHE PATENTSCHRIFT

(11) **EP 2 978 986 B1**
(45) Veröffentlichungstag und Bekanntmachung des Hinweises auf die Patenterteilung: **01.01.2020**
(21) Anmeldenummer: 14703875.6
(22) Anmeldetag: 12.02.2014
(51) Int. Cl.: F16D 1/02, F16D 3/10, F16D 3/04

(54) **KUPPLUNGSANORDNUNG**
CLUTCH ARRANGEMENT
SYSTÈME D'EMBRAYAGE

(30) Priorität: 28.03.2013 DE 102013205531
(43) Veröffentlichungstag der Anmeldung: 03.02.2016
(73) Patentinhaber: Bayerische Motoren Werke Aktiengesellschaft, 80809 München (DE)
(72) Erfinder: KALLICH, Stefan, 80935 München (DE)
(86) Internationale Anmeldenummer: PCT/EP2014/052706
(87) Internationale Veröffentlichungsnummer: WO 2014/154392

(56) Entgegenhaltungen:
- EP-A1- 0 539 254
- EP-A1- 0 807 746
- WO-A1-2007/107138
- DE-A1-102012 223 993
- US-A- 4 332 148

## Beschreibung

Vorliegende Erfindung betrifft eine Kupplungsanordnung zum koaxialen Verbinden zweier Wellen. Insbesondere wird eine Kurbelwelle eines Verbrennungsmotors mit einer Ankerwelle einer elektrischen Maschine koaxial verbunden. Des Weiteren betrifft die Erfindung ein Verfahren zur Montage der Kupplungsanordnung.

Der Stand der Technik kennt verschiedene Anordnungen zum Verbinden einer Verbrennungsmaschine mit einer elektrischen Maschine in einem Kraftfahrzeug. Im Stand der Technik werden üblicherweise Riementriebe verwendet, um die Kurbelwelle mit der Ankerwelle zu verbinden. Die Riemenscheiben sorgen dabei für einen Ausgleich der Drehmomentschwankungen und für eine spielfreie Kraftübertragung. Die Verwendung des Riementriebes und infolgedessen auch die nicht koaxiale Anordnung der elektrischen Maschine bzgl. des Verbrennungsmotors führen zu einer nicht platzsparenden Konstruktion. Des Weiteren ist der Riementrieb wartungsanfällig.

Die WO 2007/107138 A1 beschreibt eine Drehmomentübertragungseinrichtung mit einem Eingangsteil und einem Ausgangsteil, die jeweils mit einer drehbaren Welle verbindbar sind und über wenigstens ein Zwischenelement, das eine radiale Verlagerung der beiden Teile ermöglicht, antriebsmässig gekoppelt sind. Das Zwischenelement ist mittels wenigstens zwei, die radiale Verlagerung ermöglichende, radial elastischen Bereichen einerseits mit dem Eingangsteil und andererseits mit dem Ausgangsteil gekoppelt.
Es ist Aufgabe vorliegender Erfindung, eine Kupplungsanordnung zum koaxialen Verbinden zweier Wellen anzugeben, die bei kostengünstiger Herstellung und Montage wartungsarm und geräuscharm funktioniert. Des Weiteren ist es Aufgabe vorliegender Erfindung, ein entsprechendes Verfahren zur Montage der Kupplungsanordnung anzugeben. Zusätzlich hat die Verbindung die Aufgabe, Koaxialitätsfehler (Winkel- und Achsversatz) zwischen Verbrennungsmotor und elektrischer Maschine auszugleichen.

Die Aufgabe wird gelöst durch die Merkmale der unabhängigen Ansprüche. Die abhängigen Ansprüche haben vorteilhafte Weiterbildungen der Erfindung zum Gegenstand.

Somit wird die Aufgabe gelöst durch eine Kupplungsanordnung umfassend eine erste Welle, eine zweite Welle und eine Kupplung. Die erste Welle ist insbesondere eine Kurbelwelle eines Verbrennungsmotors in einem Kraftfahrzeug. Die zweite Welle ist insbesondere eine Ankerwelle einer elektrischen Maschine. Die elektrische Maschine wird vorzugsweise als Hochvoltgenerator zum Erzeugen elektrischer Energie betrieben. Ferner kann die elektrische Maschine auch als Elektromotor zum Starten des Verbrennungsmotors verwendet werden. Das Gehäuse der elektrischen Maschine ist vorzugsweise direkt mit dem Kurbelwellengehäuse bzw. dem Gehäuse des Verbrennungsmotors verbunden. Die beiden Wellen sind koaxial angeordnet. Diese sehr kompakte und platzsparende Anordnung des Verbrennungsmotors und der elektrischen Maschine bedarf einer speziellen Ausbildung der Kupplung. Um ein geräuscharmes und wartungsarmes Funktionieren der Kupplung zu gewährleisten, ist eine spielfreie Kraftübertragung zwischen den beiden Wellen, insbesondere in beiden Drehrichtungen, zu gewährleisten. Die Kupplung umfasst deshalb zumindest ein Bewegungselement und ein Kupplungselement. Das Kupplungselement ist in Umfangsrichtung und/oder in Radialrichtung beweglich angeordnet. Das Bewegungselement sorgt dafür, dass das Kupplungselement in Umfangsrichtung oder Radialrichtung spielfrei an der jeweiligen Welle anliegt bzw. angedrückt wird. Durch das spielfreie Anliegen des Kupplungselementes an der jeweiligen Welle kann ein Drehmoment spielfrei zwischen den beiden Wellen übertragen werden.

Insbesondere ist vorgesehen, dass das Bewegungselement eine Feder und/oder eine Hydraulikdruckkammer ist. Die Feder und/oder die Hydraulikdruckkammer ist in der Kupplung angeordnet und drückt das Kupplungselement gegen die erste oder zweite Welle, sodass das spielfreie Anliegen und somit auch die spielfreie Kraftübertragung möglich sind. Auch axiale Bewegungen sind möglich.

Für die genaue Ausbildung der Kupplungsanordnung sind erfindungsgemäß drei Varianten vorgesehen:
Gemäß der ersten Variante umfasst die Kupplung eine erste Zahnwelle, eine zweite Zahnwelle und eine dritte Zahnwelle. Die drei Zahnwellen bilden Kupplungselemente. Die erste Zahnwelle ist von der zweiten Zahnwelle beabstandet. Zwischen der ersten Zahnwelle und der zweiten Zahnwelle befindet sich die dritte Zahnwelle. Die drei Zahnwellen sind koaxial entlang der Rotationsachse angeordnet. Die erste Zahnwelle ist über eine Torsionsfeder mit der zweiten Zahnwelle verbunden. Dementsprechend sind die erste Zahnwelle und die zweite Zahnwelle jeweils drehfest, beispielsweise über einen Mehrkant, mit der Torsionsfeder verbunden. Die Torsionsfeder bildet in dieser Variante das Bewegungselement. Die Torsionsfeder sorgt dafür, dass die erste Zahnwelle spielfrei an der ersten Welle anliegt und die zweite Zahnwelle spielfrei an der zweiten Welle anliegt; erreicht wird dies dadurch, dass der Kraftfluss der beiden Wellen über die dritte Zahnwelle geschlossen wird.

Insbesondere ist vorgesehen, dass die erste Welle eine erste Wellenverzahnung umfasst und die zweite Welle eine zweite Wellenverzahnung umfasst. Die beiden Wellenverzahnungen sind insbesondere Innenverzahnungen an der Kurbelwelle und an der Ankerwelle. Im montierten Zustand der Kupplungsanordnung steht die erste Wellenverzahnung sowohl mit der ersten Zahnwelle als auch mit der dritten Zahnwelle im Eingriff, die zweite Wellenverzahnung steht mit der zweiten Zahnwelle und gleichzeitig mit der dritten Zahnwelle im Eingriff.

Um den Ausgleich der fertigungstechnisch bedingten Fehler bezüglich Achsvorsatz und Winkel zu schaffen, ist die Verzahnung flankenzentriert und an beiden Enden von Zahnwelle 3 ballig ausgeführt.

Die dritte Zahnwelle ist vorzugsweise innen hohl ausgebildet. Dadurch kann die Torsionsfeder sich durch die dritte Zahnwelle hindurch erstrecken. An den beiden Enden der Torsionsfeder sitzen die erste Zahnwelle und die zweite Zahnwelle. Die dritte Zahnwelle ist vorzugsweise gegenüber der Torsionsfeder drehbar angeordnet.

Die erste Zahnwelle und die zweite Zahnwelle sind bevorzugt gegeneinander verdreht, sodass die Torsionsfeder gespannt ist. Die erste Welle, insbesondere die erste Wellenverzahnung liegt, je nach Drehrichtung, entweder an der ersten Zahnwelle oder an der dritten Zahnwelle an. Genauso kann die zweite Wellenverzahnung entweder an der zweiten Zahnwelle oder an der dritten Zahnwelle anliegen. Die unterschiedlichen Drehrichtungen treten auf, je nachdem, ob die elektrische Maschine generatorisch oder motorisch betrieben wird. Dadurch, dass den Wellenverzahnungen jeweils die Zahnflanken der ersten Zahnwelle und der dritten Zahnwelle bzw. der zweiten Zahnwelle und der dritten Zahnwelle zur Verfügung stehen, ist eine spielfreie Kraftübertragung zwischen der Kurbelwelle und der Ankerwelle möglich.

In der zweiten Variante ist die Kupplung als Kreuzscheibenkupplung ausgebildet. Die Kreuzscheibenkupplung wird auch als "Oldhamkupplung" bezeichnet. Hierzu umfasst die Kupplung einen Grundkörper. Der Grundkörper umfasst beidseitig jeweils einen Fortsatz. Der erste Fortsatz steckt in einer Nut der ersten Welle. Der zweite Fortsatz steckt in einer Nut der zweiten Welle. Die in den Nuten steckenden Fortsätze ermöglichen im begrenzten Umfang einen Ausgleich eines radialen und axialen Versatzes zwischen den beiden Wellen.

In der zweiten Variante ist das Bewegungselement bevorzugt eine Feder und/oder eine Hydraulikdruckkammer. Das Kupplungselement ist als zumindest ein Kolben ausgebildet. Der Kolben ist im Grundkörper linear beweglich geführt. Die Feder und/oder die Hydraulikdruckkammer sorgen dafür, dass der Kolben vom Grundkörper weggedrückt wird. Dadurch liegt der Kolben in der Nut der jeweiligen Welle an und sorgt für eine spielfreie Kraftübertragung.

Insbesondere ist vorgesehen, dass auf der der ersten Welle zugewandten Seite des Grundkörpers, also am ersten Fortsatz, zumindest ein Kolben vorgesehen ist und dass auf der der zweiten Welle zugewandten Seite, also am zweiten Fortsatz, ebenfalls zumindest ein Kolben angeordnet ist.

In besonders bevorzugter Ausführung sind in beiden Fortsätzen des Grundkörpers jeweils mehrere Kolben angeordnet. Jeder Kolben ist zumindest durch eine Feder belastet und kann darüber hinaus mittels einer eigenen Hydraulikdruckkammer nach außen gedrückt werden.

Entsprechende Hydraulikkanäle im Grundkörper sorgen für eine Druckversorgung der Hydraulikdruckkammern. Insbesondere wird hierzu der Hydraulikdruck aus der Schmiermittelversorgung des Verbrennungsmotors verwendet.

Ein bevorzugtes Rückschlagventil in den Hydraulikkanälen sorgt für eine ausreichende Aufrechterhaltung des Drucks in den Hydraulikdruckkammern unterhalb der einzelnen Kolben. In den Kolben sind bevorzugt kleine Auslassöffnungen vorgesehen. Über diese kleinen Auslassöffnungen tritt Hydrauliköl aus den Hydraulikdruckkammern auf die Oberfläche der Kolben. Dies führt zu einem gedrosselten Ablassen des Drucks in den Hydraulikdruckkammern und gleichzeitig zu einer Schmierung der Gleitflächen zwischen der Kupplung und den beiden Wellen.

Die Kraft der Federn bzw. die Kraft der Hydraulikdruckkammern muss nicht so groß sein, um die Kolben stets vom Grundkörper wegzudrücken. Es reicht aus, dass die Kolben zumindest bei einem Wechsel der Drehrichtung an den beiden Wellen anliegen. Mit steigendem Drehmoment werden die Kolben dann in den Grundkörper hineingedrückt. Dabei wird das Hydrauliköl aus den Hydraulikdruckkammern bevorzugt über die Auslassöffnungen nach außen gefördert.

Gemäß einer dritten Variante, welche nicht Teil der Erfindung ist, ist die Kupplung als Klauenkupplung ausgebildet. Die Kupplung umfasst dabei einen drehfest an der ersten Welle angeordneten ersten Ring, einen drehfest an der zweiten Welle angeordneten zweiten Ring und einen zwischen den beiden Wellen angeordneten Ausgleichsring. Der Ausgleichsring stellt dabei das bewegliche Kupplungselement dar. Der erste Ring umfasst erste Klauen. Der zweite Ring umfasst zweite Klauen. Der Ausgleichsring umfasst Ausgleichsklauen. Der Ausgleichsring ist im begrenzten Umfang gegenüber den beiden Wellen beweglich. Die ersten Klauen, die zweiten Klauen und die Ausgleichsklauen greifen ineinander. Je nach Größe der Klauen, ist somit ein begrenzter Ausgleich eines radialen und axialen Versatzes möglich. Betrachtet man die Anordnung in Umfangsrichtung, so befindet sich jeweils eine Ausgleichsklaue zwischen einer ersten Klaue und einer zweiten Klaue. Zumindest zwischen einer zweiten Klaue und einer Ausgleichsklaue ist eine Feder, ausgebildet als Spiraldruckfeder oder Tellerfeder, angeordnet. Die Feder stützt sich mit einem Ende gegen eine zweite Klaue und mit dem anderen Ende gegen eine Ausgleichsklaue. Die Ausgleichsklaue wiederum drückt gegen eine erste Klaue, wodurch diese erste Klaue gegen eine nächste zweite Klaue gedrückt wird. Die Feder dient somit dazu, die zweiten Klauen gegen die ersten Klauen in Richtung des abgebenden Nutzmomentes zu drücken.

Insbesondere sind Taschen in den Ausgleichsklauen vorgesehen, sodass die Federn teilweise in diesen Taschen angeordnet werden können. Bei einem Wechsel der Richtung des Moments werden die Federn soweit komprimiert, sodass sie vollständig in den Taschen sitzen. Dadurch liegen die Ausgleichsklauen auf den zweiten Klauen an.

Zur Montage des zweiten Rings auf der zweiten Welle wird vorzugsweise ein Konusspannelement verwendet.

Die erste Welle ist vorzugsweise konusförmig ausgebildet. Ein dazu passender Innenkonus ist vorzugsweise an dem ersten Ring ausgebildet. Zusätzlich zu dieser Konusverbindung wird bevorzugt eine Spanschraube und eine Spannscheibe verwendet. Die Spannschraube wird vorzugsweise stirnseitig in die erste Welle geschraubt, um so den ersten Ring auf der ersten Welle zu halten.

Die Erfindung umfasst bevorzugt ein Steuergerät zum Steuern und/oder Regeln der elektrischen Maschine, wobei das Steuergerät dazu ausgebildet ist, die elektrische Maschine so anzusteuern, um Drehungleichförmigkeiten auszugleichen. Zum Beispiel in Abhängigkeit der Zylinderanzahl im Verbrennungsmotor entstehen Drehungleichförmigkeiten an der Kurbelwelle. Diese können durch eine entsprechende Ansteuerung der elektrischen Maschine ausgeglichen werden.

Die Erfindung umfasst des Weiteren ein Verfahren zur Montage einer Kupplungsanordnung gemäß der oben beschriebenen ersten Variante. Dieses Verfahren umfasst die folgenden Schritte: (i) Spannen der Torsionsfeder durch Verdrehen der ersten Zahnwelle gegenüber der zweiten Zahnwelle, (ii) Einsetzen einer ersten Verdrehsicherung, die die erste Zahnwelle gegenüber der dritten Zahnwelle fixiert und einer zweiten Verdrehsicherung, die die zweite Zahnwelle gegenüber der dritten Zahnwelle fixiert, (iii) Montieren der ersten Zahnwelle an der ersten Welle und der zweiten Zahnwelle an der zweiten Welle, und (iv) Lösen der beiden Verdrehsicherungen.

Die Unteransprüche und die vorteilhaften Ausgestaltungen der erfindungsgemäßen Kupplungsanordnung finden entsprechend vorteilhafte Anwendung für das erfindungsgemäße Verfahren.

Insbesondere ist bevorzugt vorgesehen, dass das Lösen der beiden Verdrehsicherungen gleichzeitig mit dem Montieren der ersten und zweiten Zahnwelle an der ersten und zweiten Welle erfolgt. Dabei wird durch Einschieben der jeweiligen Zahnwelle in die Innenverzahnung an der Kurbelwelle oder Ankerwelle die Verdrehsicherung verschoben. Dadurch löst sich die Verdrehsicherung.

Für die Verdrehsicherung gibt es zwei bevorzugte Möglichkeiten: Zum einen kann die Verdrehsicherung als eine Manschette ausgebildet sein. Zum anderen kann die Verdrehsicherung als Pins ausgebildet sein.

Die Manschette wird nach dem Spannen der Torsionsfeder aufgeschoben, sodass eine Innenverzahnung an der Manschette gleichzeitig mit der ersten Zahnwelle und der dritten Zahnwelle bzw. mit der zweiten Zahnwelle und der dritten Zahnwelle in Eingriff steht. Beim Montieren der Kupplung an den beiden Wellen, werden die Manschetten bevorzugt nach innen geschoben. Die Manschetten sitzen nach dem Montieren bevorzugt vollständig auf der dritten Zahnwelle. Nach dem Montieren erfüllen die Manschetten keine weitere Funktion, verbleiben jedoch bevorzugt auf der dritten Zahnwelle.

Alternativ zu den Manschetten können die Pins verwendet werden. Die Pins stecken stirnseitig in den Zahnwellen. Nach dem Spannen der Torsionsfeder sind die Pins so positioniert, dass sie die erste Zahnwelle bezüglich der dritten Zahnwelle bzw. die zweite Zahnwelle bezüglich der dritten Zahnwelle fixieren, sodass sich die Torsionsfeder nicht mehr entspannen kann. Beim Montieren der Kupplungsanordnung werden die Pins verschoben, insbesondere nach innen in die dritte Zahnwelle.

Es ist auch möglich, an einer Seite der Kupplung eine Manschette als Verdrehsicherung zu verwende und auf der anderen Seite die Pins.

Zum Spannen der Torsionsfeder ist insbesondere folgender Verfahrensablauf vorgesehen: Durch Verdrehen der ersten und/oder zweiten Zahnwelle wird die Torsionsfeder gespannt, bis eine gewünschte Federkraft gemessen wird. Für das exakte Einstellen der Federkraft ist es vorteilhaft, die Materialplastifizierung (ähnlich Dehnschrauben) zu nutzen. Die Federkraft bleibt so über einen weiten "Aufzugswinkel" nahezu konstant und wird hauptsächlich durch den Federdurchmesser bestimmt. Daraufhin erfolgt ein Weiterdrehen oder Zurückdrehen der ersten Zahnwelle und/oder zweiten Zahnwelle, bis die Verzahnung der drei Zahnwellen übereinstimmt, sodass die Manschette aufgeschoben werden kann. Bei Verwendung der Pins, wird soweit vor- oder zurückgedreht, bis die Löcher der Pins fluchten, und infolgedessen die Pins eingesetzt werden können.

Weitere Einzelheiten, Merkmale und Vorteile der Erfindung ergeben sich aus der nachfolgenden Beschreibung und den Figuren. Es zeigen:
- Figur 1: eine erfindungsgemäße Kupplungsanordnung gemäß einem ersten Ausführungsbeispiel,
- Figuren 2 und 3: eine Kupplung der erfindungsgemäßen Kupplungsanordnung gemäß dem ersten Ausführungsbeispiel,
- Figuren 4 bis 6: eine Kupplung der erfindungsgemäßen Kupplungsanordnung gemäß einem zweiten Ausführungsbeispiel,
- Figur 7: die erfindungsgemäße Kupplungsanordnung gemäß einem dritten Ausführungsbeispiel,
- Figuren 8 und 9: die Kupplung der erfindungsgemäßen Kupplungsanordnung gemäß dem dritten Ausführungsbeispiel,
- Figur 10: die Kupplung der erfindungsgemäßen Kupplungsanordnung gemäß einem vierten Ausführungsbeispiel,
- Figur 11: die Kupplung der erfindungsgemäßen Kupplungsanordnung gemäß einem fünften Ausführungsbeispiel,
- Figur 12: die erfindungsgemäße Kupplungsanordnung gemäß einem sechsten Ausführungsbeispiel, und
- Figur 13: eine Explosionsdarstellung der Kupplung der erfindungsgemäßen Kupplungsanordnung gemäß dem sechsten Ausführungsbeispiel.

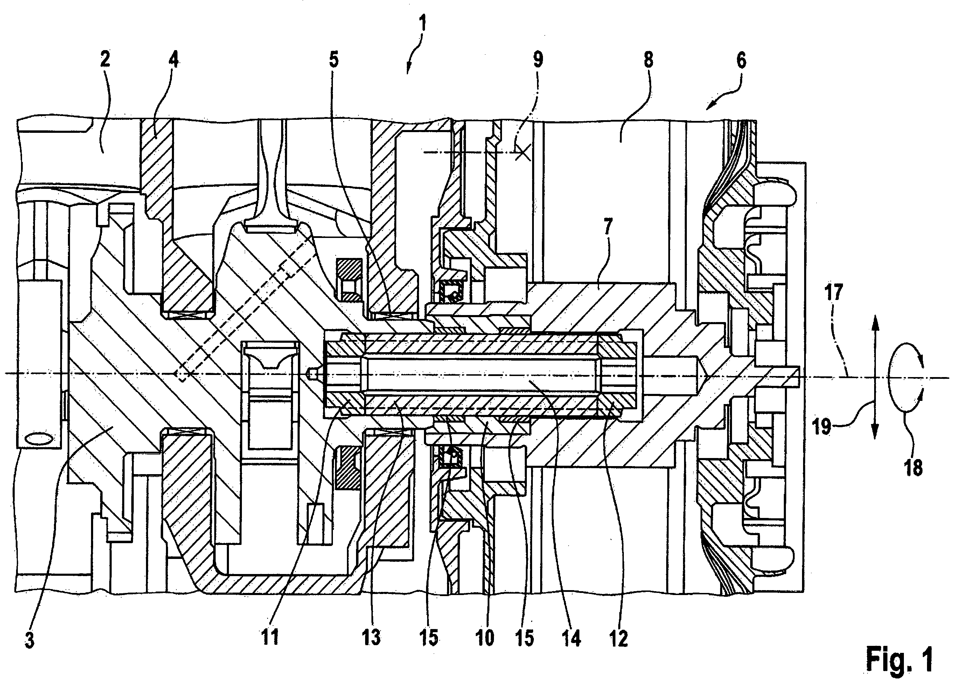

Im Folgenden werden anhand der Figuren 1 bis 13 sechs Ausführungsbeispiele einer Kupplungsanordnung 1 beschrieben. Gleiche bzw. funktional gleiche Bauteile sind dabei mit denselben Bezugszeichen versehen.

Gemäß Fig. 1 umfasst die Kupplungsanordnung eine erste Welle 3, ausgebildet als Kurbelwelle eines Verbrennungsmotors 2 in einem Kraftfahrzeug. Die erste Welle 3 ist in einem Motorgehäuse 4 angeordnet. In dem Motorgehäuse 4 ist die erste Welle 3 über zumindest ein Lager 5 gelagert.

Des Weiteren umfasst die Kupplungsanordnung 1 eine zweite Welle 7, ausgebildet als Ankerwelle einer elektrischen Maschine 6. Die elektrische Maschine 6 wir in erster Linie als Hochvoltgenerator betrieben. Ferner kann die elektrische Maschine 6 auch motorisch betrieben werden, um den Verbrennungsmotor 2 zu starten. Die elektrische Maschine 6 umfasst ein Generatorgehäuse 8. In diesem Generatorgehäuse 8 ist die zweite Welle 7 gelagert.

Über eine nur schematisch dargestellte Verschraubung 9 ist das Generatorgehäuse 8 mit dem Motorgehäuse 4 fest verbunden. Die beiden Wellen 3, 7 sind koaxial angeordnet. Die Anordnung ist dabei möglichst platzsparend konstruiert. Für die koaxiale Verbindung der beiden Wellen 3, 7 ist eine Kupplung 10 vorgesehen. Die Kupplung 10 ragt in eine Innenverzahnung an der ersten Welle 3 und in eine Innenverzahnung an der zweiten Welle 7. Das Generatorgehäuse 8 ist so eng an dem Motorgehäuse 4 platziert, sodass die Kupplung 10 in Axialrichtung bis zum Lager 5 ragt.

Entsprechend der Rotation der beiden Wellen 3, 7 und der Kupplung 10 ist eine Rotationsachse 17 definiert. Um die Rotationsachse 17 herum ist eine Umfangsrichtung 18 definiert. Senkrecht zur Rotationsachse 17 steht eine Radialrichtung 19.

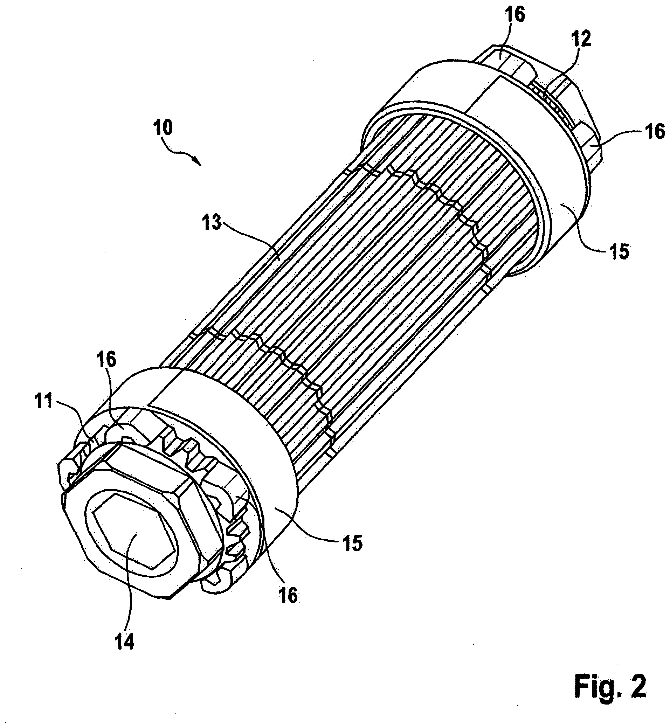

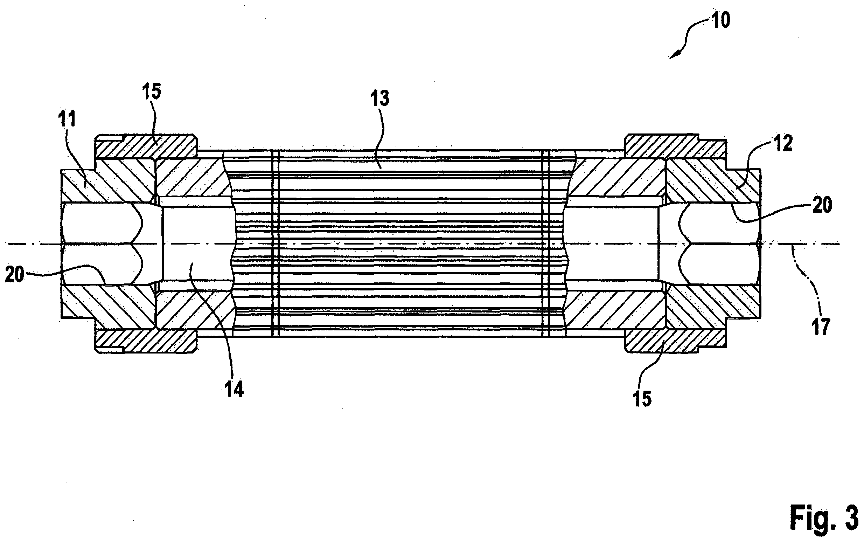

Der genaue Aufbau der Kupplung 10 ist in den Figuren 2 und 3 gezeigt. Fig. 3 zeigt dabei eine Schnittansicht. Die Kupplung 10 umfasst eine erste Zahnwelle 11, eine zweite Zahnwelle 12, eine dritte Zahnwelle 13 und eine Torsionsfeder 14. Die dritte Zahnwelle 13 ist entlang der Rotationsachse 17 zwischen der ersten Zahnwelle 11 und der zweiten Zahnwelle 12 angeordnet. Die Torsionsfeder 14 ist an ihren Enden über einen Mehrkant 20 mit der ersten Zahnwelle 11 und der zweiten Zahnwelle 12 drehfest verbunden. Die dritte Zahnwelle 13 ist innen hohl, sodass sich die Torsionsfeder 14 durch die dritte Zahnwelle 13 hindurch erstrecken kann.

Die Figuren 2 und 3 zeigen die Kupplung 10 in einem Zustand, bevor sie in den beiden Wellen 3, 7 montiert wird. Gemäß den Figuren 2 und 3 stecken beidseitig auf der Kupplung 10 Verdrehsicherungen 15, ausgebildet als Manschetten. Vor dem Montieren der Kupplung 10, werden die erste Zahnwelle 11 und die zweite Zahnwelle 12 gegeneinander verdreht, sodass die Torsionsfeder 14 gespannt ist. Um diesen gespannten Zustand zu halten, wird beidseitig die Verdrehsicherung 15 aufgeschoben. Die Verdrehsicherungen 15 greifen dabei in die Verzahnungen der Zahnwellen 11, 12, 13 ein. Beim Montieren der Kupplung 10, werden die Verdrehsicherungen 15 nach innen, auf die dritte Zahnwelle 13 verschoben. Dadurch sind die erste Zahnwelle 11 und die zweite Zahnwelle 12 nicht mehr gegenüber der dritten Zahnwelle 13 fixiert und die Torsionsfeder 14 kann wirken, wodurch die abtreibende Flanke der Innenverzahnung der Kurbelwelle an die angetriebene Flanke von Zahnwelle 13 und abtreibende Flanke der Zahnwelle 13 an die anzutreibende Flanke der Innenverzahnung der Ankerwelle mit der Federkraft gedrückt wird.

Die beiden Verdrehsicherungen 15 können nach dem Montieren funktionslos auf der dritten Zahnwelle 13 verbleiben. Gemäß Fig. 2 sind an den beiden Verdrehsicherungen 15 mehrere Nasen 16 ausgebildet. An der ersten Welle 3 und/oder an der zweiten Welle 7 müssen Vorrichtungen vorgesehen sein, die an diese Nasen 16 angreifen, um beim Montieren die Verdrehsicherungen 15 nach innen zu verschieben und die Haltekraft von der Vorspannung von den Manschetten an die Innenverzahnung zu übergeben.

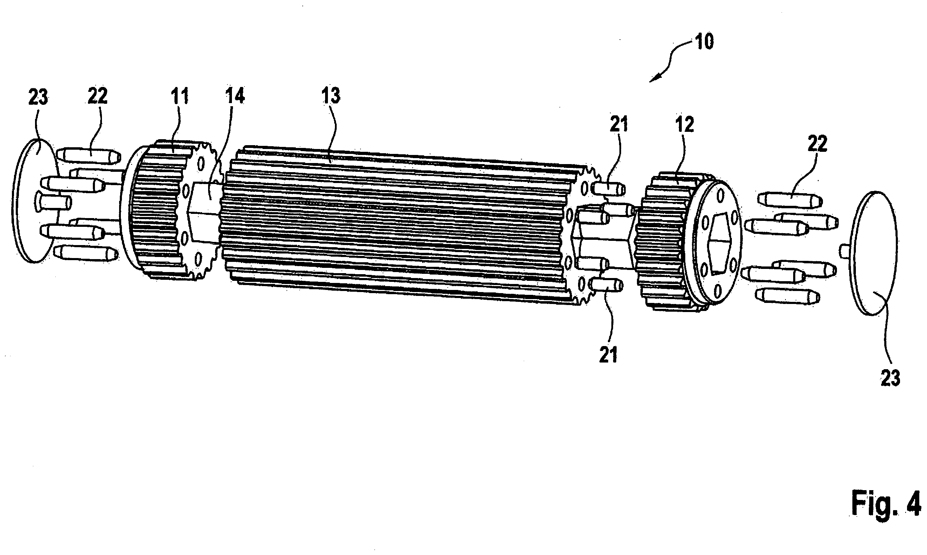

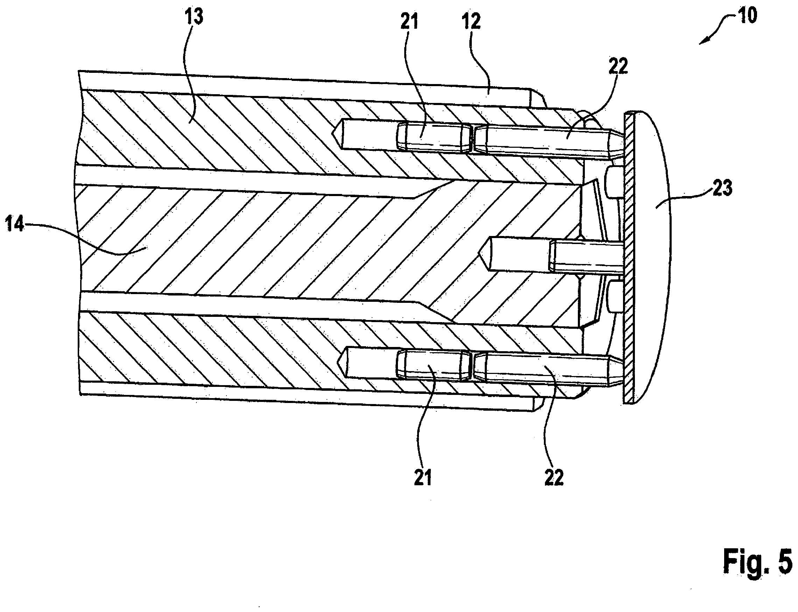

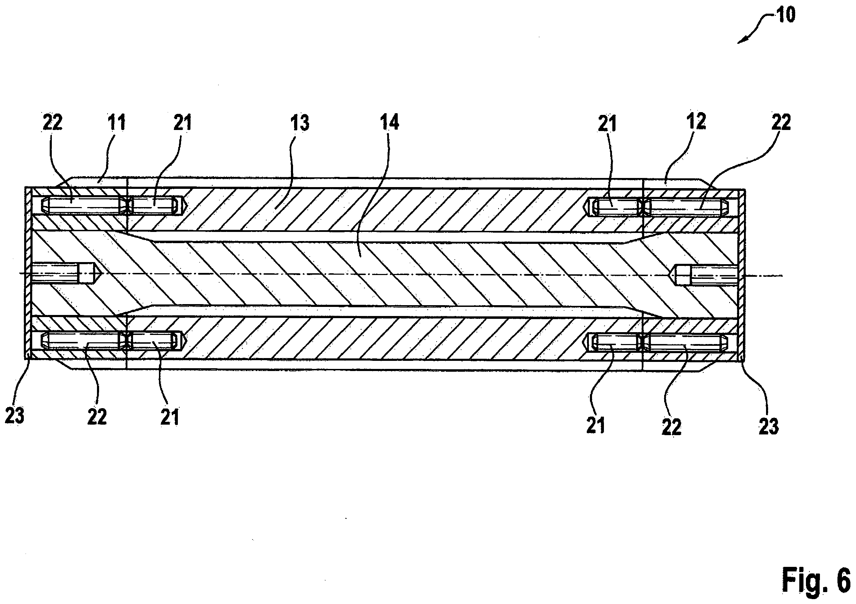

Figuren 4 bis 6 zeigen ein weiteres Ausführungsbeispiel, bei dem die Kupplung 10 die drei Zahnwellen 11, 12, 13 und die Torsionsfeder 14 umfasst. Fig. 4 zeigt eine Explosionsdarstellung der Kupplung 10. Die Figuren 5 und 6 zeigen Schnittansichten der Kupplung 10 in verschiedenen Montagezuständen.

Im zweiten Ausführungsbeispiel sind die Verdrehsicherungen als Pins 21 ausgebildet. Nach dem Verdrehen der ersten Zahnwelle 11 und der zweiten Zahnwelle 12, zum Spannen der Torsionsfeder 14, werden Pins 21 eingeschoben, um die Torsionsfeder 14 auf Spannung zu halten. Dieser Zustand ist in Fig. 5 dargestellt.

Bei der Montage der Kupplung 10 in die beiden Wellen 3, 7 werden Montagestifte 22 stirnseitig eingeschoben. Diese Montagestifte 22 schieben die Pins 21 weiter nach innen, in die dritte Zahnwelle 13. Dadurch löst sich die Verdrehsicherung und die Torsionsfeder 14 kann wirken.

Zum Einschieben der Montagestifte 22 sind beidseitig stirnseitige Montageplatten 23 gezeigt. Diese Montageplatten 23 können auch Bestandteile der Wellen 3, 7 sein, sodass gleichzeitig mit dem Montieren der Kupplung 10 die Pins 21 gelöst werden.

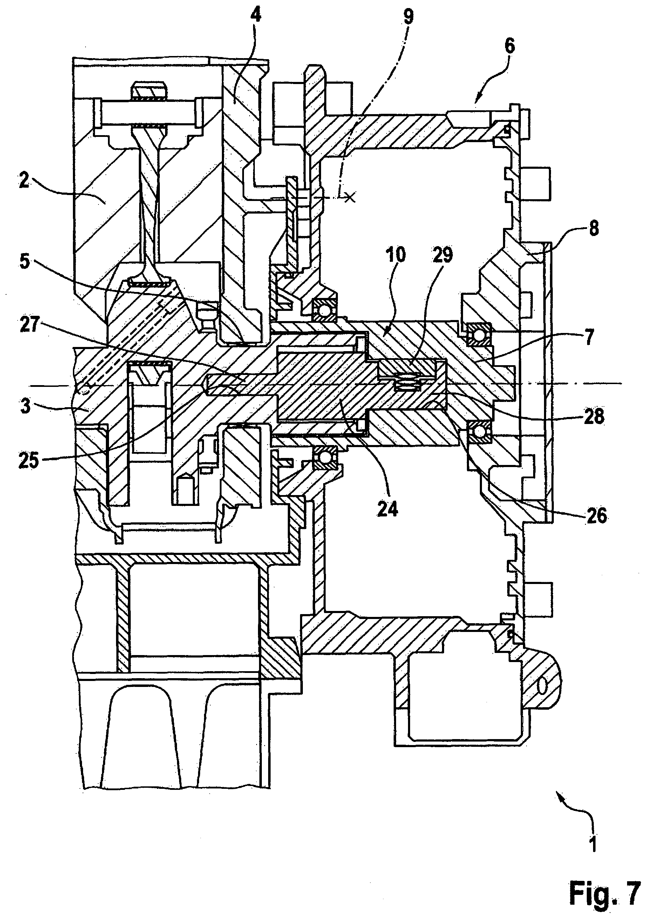

Die Figuren 7 bis 11 zeigen Ausführungsbeispiele, bei denen die Kupplung 10 als Kreuzscheibenkupplung (auch: Oldhamkupplung) ausgebildet sind.

Fig. 7 zeigt die Kupplungsanordnung 1 mit der Kupplung 10. Die Kupplung 10 umfasst einen Grundkörper 24. Der Grundkörper 24 weist an seinen beiden axialen Enden jeweils einen Fortsatz 27, 28 auf. Der erste Fortsatz 27 steckt in einer ersten Nut 25 in der ersten Welle 3. Der zweite Fortsatz 28 steckt in einer zweiten Nut 26 in der zweiten Welle 7.

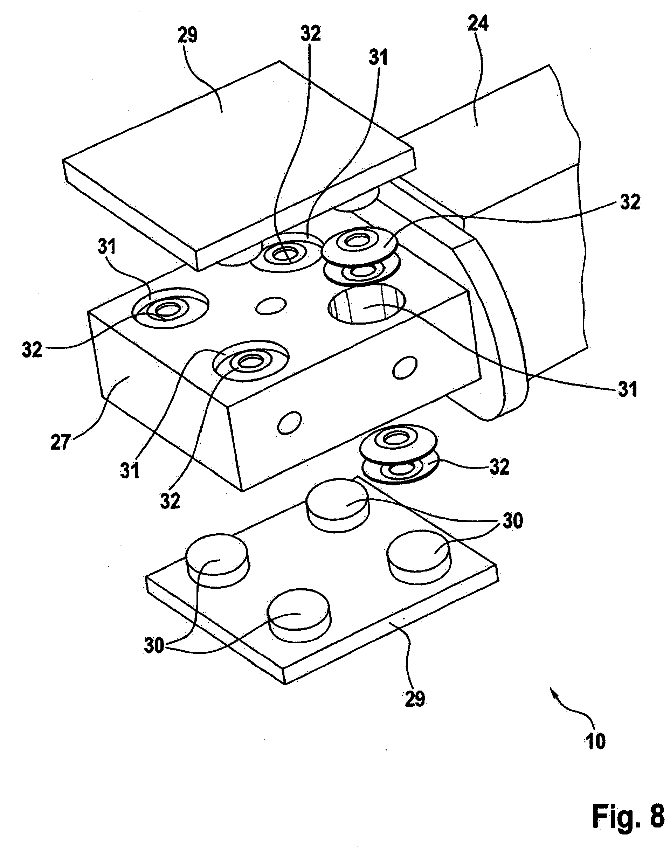

Fig. 8 zeigt den ersten Fortsatz 27 des Grundkörpers 24 im Detail. Der zweite Fortsatz 28 ist genauso, jedoch um 90° um die Rotationsachse 17 verdreht, aufgebaut.

Am ersten Fortsatz 27 gibt es zwei gegenüberliegende Flächen, die je nach Drehrichtung in der ersten Nut 24 anliegen, um Drehmoment zu übertragen. Auf beiden Flächen ist jeweils ein Kolben 29 vorgesehen. Der Kolben 29 stellt eine plane Fläche für die spielfreie Anlage dar.

An der Innenseite der Kolben 29 sind jeweils vier Noppen 30 vorgesehen. Die Noppen 30 stecken jeweils in einer Hydraulikdruckkammer 31. In den Hydraulikdruckkammern 31 befindet sich jeweils eine Feder 32, ausgebildet als Tellerfeder. Die Federn 32 und der entsprechende Druck in den Hydraulikdruckkammern 31 drücken die Kolben 29 vom ersten Fortsatz 27 weg.

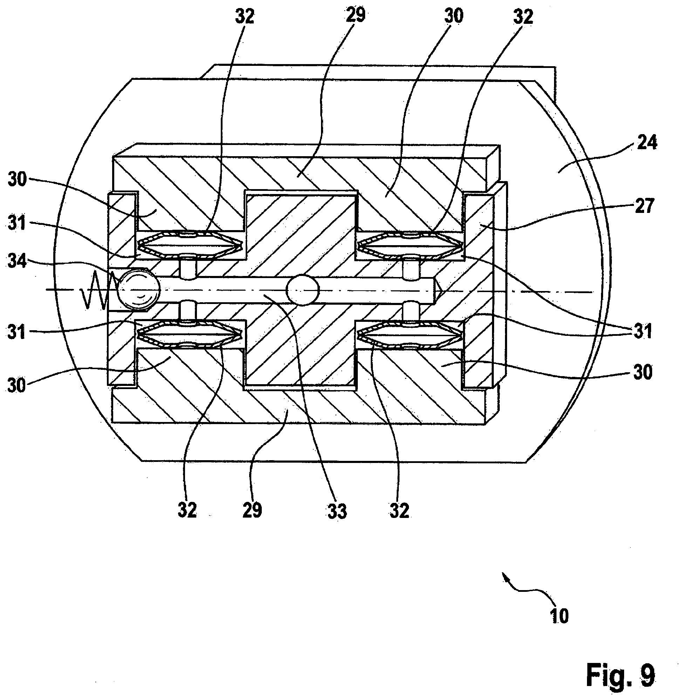

Fig. 9 zeigt in einer Schnittansicht Hydraulikkanäle 33 zur Druckversorgung der Hydraulikkammern 31. Ein Rückschlagventil 34 sorgt für einen ausreichenden Druckerhalt in den Hydraulikdruckkammern 31. Über das Rückschlagventil 34 wird vorzugsweise Hydrauliköl aus dem Verbrennungsmotor 2 in die Hydraulikkanäle 33 und somit in die Hydraulikdruckkammern 31 gefördert.

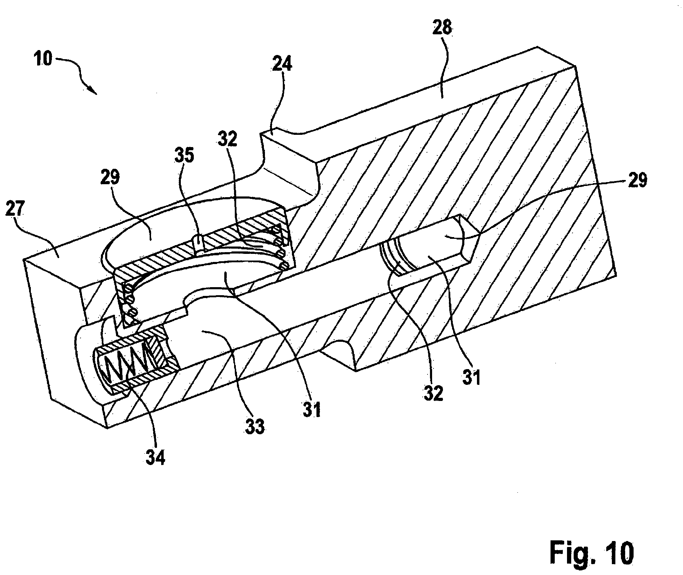

Fig. 10 zeigt die Ausbildung des Grundkörpers 24 gemäß einem weiteren Ausführungsbeispiel. In diesem Ausführungsbeispiel ist an jedem Fortsatz 27, 28 jeweils ein großer Kolben 29 vorgesehen. Auch diese großen Kolben 29 sind über Federn 32 belastet und befinden sich in Hydraulikdruckkammern 31. Fig. 10 zeigt, dass an jedem Fortsatz 27, 28 jeweils nur auf einer Seite ein Kolben 29 vorgesehen ist. Alternativ dazu könnten jedoch an jedem Fortsatz 27, 28 jeweils zwei gegenüberliegende Kolben 29 verwendet werden.

Des Weiteren zeigt Fig. 10, dass in den Kolben 29 Auslassöffnungen 35 vorgesehen sind. Durch diese Auslassöffnungen 35 können Öl aus den Hydraulikdruckdruckkammern 31 nach außen treten. Die Auslassöffnungen 35 stellen jeweils Drosseln dar, um den Druck in den Hydraulikdruckkammern 31 zu regulieren. Gleichzeitig dient das austretende Öl zur Schmierung der Flächen zwischen der Kupplung 10 und den beiden Wellen 3, 7.

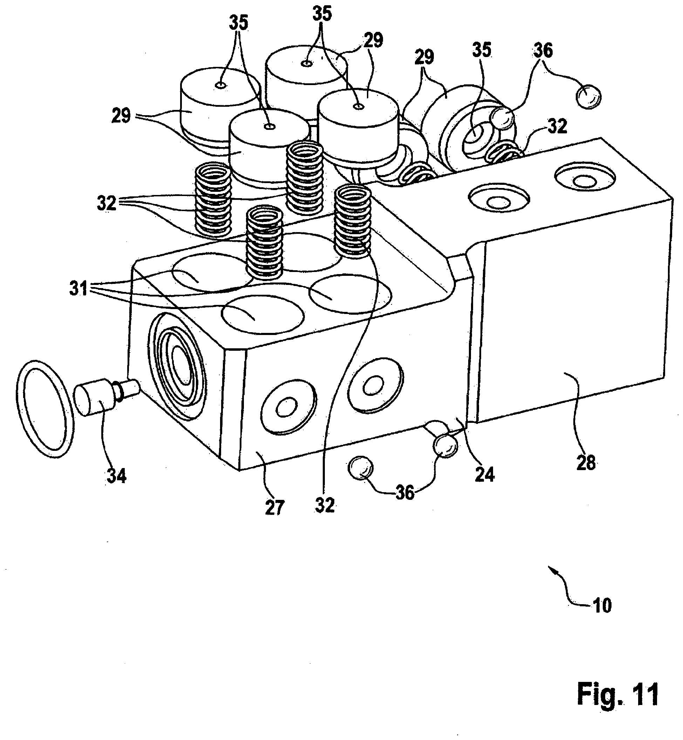

Fig. 11 zeigt ein weiteres Ausführungsbeispiel für die Kreuzscheibenkupplung. Gemäß Fig. 11 gibt es in beiden Fortsätzen 27, 28 mehrere, nebeneinander angeordnete kleine Kolben 29. Jeder Kolben 29 sitzt in einer eigenen Hydraulikdruckkammer 31 und ist über eine eigene Feder 32, ausgebildet als Spiralfeder, belastet. Im gezeigten Ausführungsbeispiel werden pro Fortsatz 27, 28 vier Kolben 29 verwendet.

Überschüssige Öffnungen, die beim Bohren der Hydraulikkanäle 33 anfallen, sind über Verschlusskugeln 36 verschlossen.

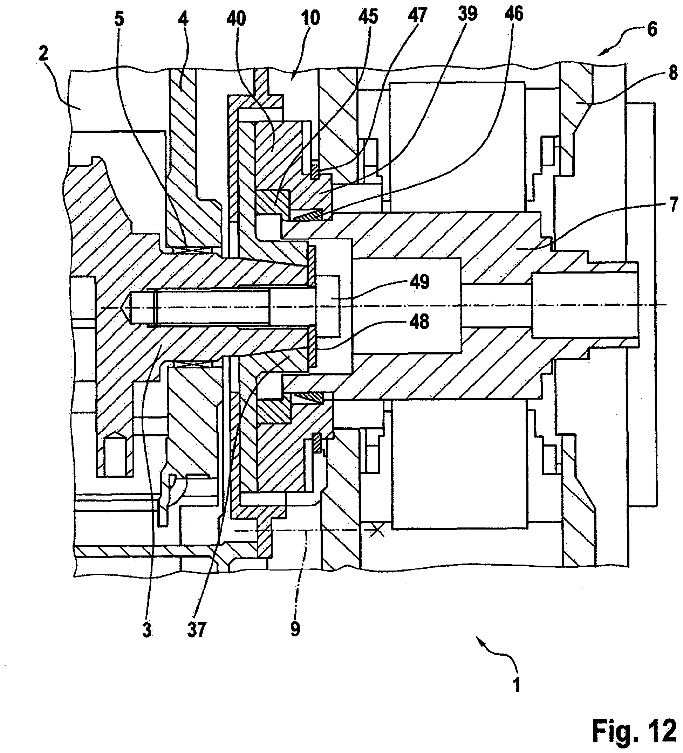

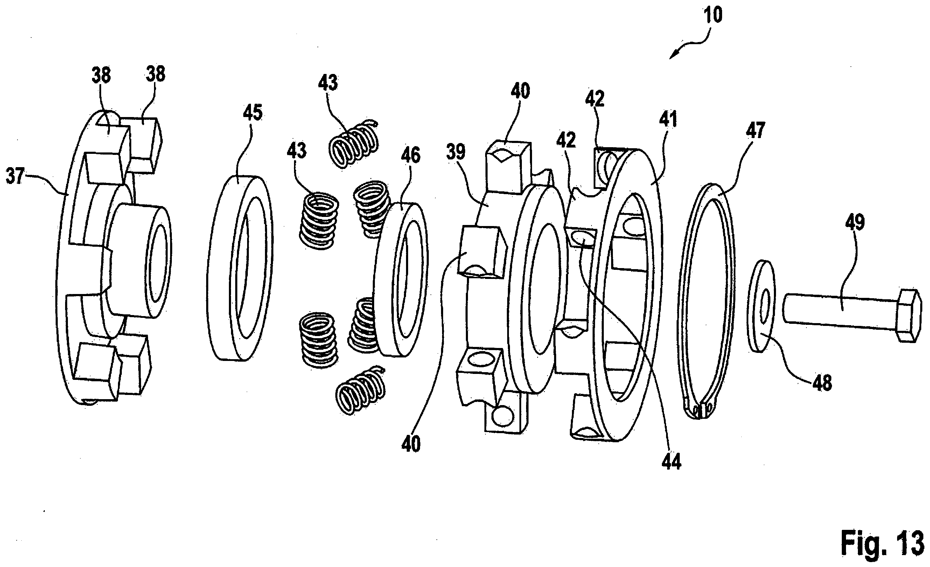

Fig. 12 zeigt den montierten Zustand der Kupplungsanordnung1 gemäß einem weiteren Ausführungsbeispiel, welches nicht Teil der Erfindung ist. Fig. 13 zeigt eine Explosionsdarstellung der zugehörigen Kupplung 10.

Die Kupplung 10 umfasst einen ersten Ring 37, einen zweiten Ring 39 und einen Ausgleichsring 41. Der erste Ring 37 weist einen Innenkonus auf, der auf einem Außenkonus auf der ersten Welle 3 steckt. Des Weiteren ist in die erste Welle 3 eine Spannschraube 49 eingeschraubt, die über eine Spannscheibe 48 den ersten Ring 37 auf der ersten Welle 3 fixiert.

Der zweite Ring 39 ist mittels eines Konusspannelementes 46 und einer Spannhülse 45 drehfest auf der zweiten Welle 7 montiert. Ein Sicherungsring 47 sichert die axiale Lage des Ausgleichsrings 41 gegenüber dem zweiten Ring 39.

Der erste Ring 37 weist erste Klauen 38 auf. Der zweite Ring 39 weist zweite Klauen 40 auf. Die ersten und zweiten Klauen 38, 40 erstrecken sich vorzugsweise in Axialrichtung. Der Ausgleichsring 41 weist Ausgleichsklauen 42 auf. Die Ausgleichsklauen erstrecken sich bevorzugt in Radialrichtung 19.

Die ersten Klauen 38, zweiten Klauen 40 und Ausgleichsklauen 42 greifen ineinander. In Umfangsrichtung 18 betrachtet befindet sich jeweils eine Ausgleichsklaue 42 zwischen einer ersten Klaue 38 und einer zweiten Klaue 40.

An den Ausgleichsklauen 42 sind sich in Umfangsrichtung 18 öffnende Taschen 44 ausgebildet. In diesen Taschen 44 sitzt jeweils eine Feder 43, insbesondere Spiraldruckfeder. Die jeweilige Feder 43 stützt sich mit einem Ende in der Tasche 44 und mit dem anderen Ende gegen eine zweite Klaue 40 ab. Die Feder 43 drückt die jeweilige Ausgleichsklaue 42 von der zweiten Klaue 40 weg. Dadurch drückt die Ausgleichsklaue 42 auf eine der ersten Klauen 38, wodurch wiederum diese erste Klaue 38 gegen die nächste zweite Klaue 40 gedrückt wird. Dadurch ist ein spielfreies Anliegen der ersten Klaue 38 an der zweiten Klaue 40 und somit auch eine spielfreie Drehmomentübertragung möglich.

Zusammenfassend betrifft die Erfindung eine Kupplungsanordnung 1, umfassend eine erste Welle 3, vorzugsweise eine Kurbelwelle eines Verbrennungsmotors 2, eine zur ersten Welle 3 koaxial angeordnete zweite Welle 7, vorzugsweise eine Ankerwelle einer elektrischen Maschine 6, und eine Kupplung 10 zum spielfreien Verbinden der ersten Welle 3 mit der zweiten Welle 7, wobei entsprechend der beiden koaxialen Wellen 3, 7 eine Rotationsachse 17 definiert ist, um die Rotationsachse 17 eine Umfangsrichtung 18 definiert ist, und senkrecht zur Rotationsachse 17 eine Radialrichtung 19 definiert ist, wobei die Kupplung 10 zumindest ein Bewegungselement 14, 31, 32, 43 und zumindest ein gegenüber den beiden Wellen 3, 7 in Umfangsrichtung 18 und/oder in Radialrichtung 19 bewegliches Kupplungselement 11, 29, 41 umfasst, und wobei das Bewegungselement 14, 31, 32, 43 dazu ausgebildet ist, um das Kupplungselement 11, 29, 41 in Umfangsrichtung 18 und/oder Radialrichtung 19 spielfreie an die erste und/oder zweite Welle 3, 7 anzudrücken, um ein Spiel in Umfangsrichtung 18 zwischen den beiden Wellen 3, 7, sowie fertigungstechnisch unumgängliche Toleranzen bezüglich Achs- und Winkelvorsatz von den beiden Wellen 3 und 7 auszugleichen. Ebenso wird ermöglicht, einen axialen Ausgleich während des Betriebs aufgrund von z.B. thermischer Ausdehnung zu schaffen.

### Bezugszeichenliste:

- 1: Kupplungsanordnung
- 2: Verbrennungsmotor
- 3: erste Welle (Kurbelwelle)
- 4: Motorgehäuse
- 5: Lager
- 6: elektrische Maschine
- 7: zweite Welle (Ankerwelle)
- 8: Generatorgehäuse
- 9: Verschraubung
- 10: Kupplung
- 11: erste Zahnwelle
- 12: zweite Zahnwelle
- 13: dritte Zahnwelle
- 14: Torsionsfeder
- 15: Verdrehsicherungen
- 16: Nasen
- 17: Rotationsachse
- 18: Umfangsrichtung
- 19: Radialrichtung
- 20: Mehrkant
- 21: Pins
- 22: Montagestift
- 23: Montageplatte
- 24: Grundkörper
- 25: erste Nut
- 26: zweite Nut
- 27: erster Fortsatz
- 28: zweiter Fortsatz
- 29: Kolben
- 30: Noppen
- 31: Hydraulikdruckkammern
- 32: Federn
- 33: Hydraulikkanäle
- 34: Rückschlagventil
- 35: Auslassöffnungen
- 36: Verschlusskugeln
- 37: erster Ring
- 38: erste Klauen
- 39: zweiter Ring
- 40: zweite Klauen
- 41: Ausgleichsring
- 42: Ausgleichsklauen
- 43: Federn
- 44: Taschen
- 45: Spanhülse
- 46: Konusspannelement
- 47: Sicherungsring
- 48: Spannscheibe
- 49: Spannschraube

## Patentansprüche

1. Kupplungsanordnung (1) umfassend
- eine erste Welle (3), vorzugsweise eine Kurbelwelle eines Verbrennungsmotors (2),
- eine zur ersten Welle (3) koaxial angeordnete zweite Welle (7), vorzugsweise eine Ankerwelle einer elektrischen Maschine (6), und
- eine Kupplung (10) zum spielfreien Verbinden der ersten Welle (3) mit der zweiten Welle (7),
- wobei entsprechend der beiden koaxialen Wellen (3, 7) eine Rotationsachse (17) definiert ist, um die Rotationsachse (17) eine Umfangsrichtung (18) definiert ist, und senkrecht zur Rotationsachse (17) eine Radialrichtung (19) definiert ist,
- wobei die Kupplung (10) zumindest ein Bewegungselement (14, 31, 32, 43) und zumindest ein gegenüber den beiden Wellen (3, 7) in Umfangsrichtung (18) und/oder in Radialrichtung (19) bewegliches Kupplungselement (11, 29, 41) umfasst, und
- wobei das Bewegungselement (14, 31, 32, 43) dazu ausgebildet ist, um das Kupplungselement (11, 29, 41) in Umfangsrichtung (18) und/oder Radialrichtung (19) spielfreie an die erste und/oder zweite Welle (3, 7) anzudrücken, um ein Spiel in Umfangsrichtung (18) zwischen den beiden Wellen (3, 7) auszugleichen,
**dadurch gekennzeichnet, dass**
die Kupplung (10) als Kupplungselemente eine erste Zahnwelle (11), eine zweite Zahnwelle (12) und eine zwischen der ersten Zahnwelle (11) und der zweiten Zahnwelle (12) angeordnete dritte Zahnwelle (13) umfasst, wobei die drei Zahnwellen (11-13) koaxial zur Rotationsachse (17) angeordnet sind, wobei die erste Zahnwelle (11) über eine Torsionsfeder (14) mit der zweiten Zahnwelle (12) verbunden ist.

2. Kupplungsanordnung nach Anspruch 1, **dadurch gekennzeichnet, dass**
- die erste Welle (3) eine erste Wellenverzahnung umfasst, und
- die zweite Welle (7) eine zweite Wellenverzahnung umfasst,
- wobei die erste Wellenverzahnung mit der ersten Zahnwelle (11) und gleichzeitig mit der dritten Zahnwelle (13) im Eingriff steht, und
- wobei die zweite Wellenverzahnung mit der zweiten Zahnwelle (12) und gleichzeitig mit der dritten Zahnwelle (13) im Eingriff steht.

3. Kupplungsanordnung nach einem der Ansprüche 1 oder 2, **dadurch gekennzeichnet, dass** die erste Zahnwelle (11) und die zweite Zahnwelle (12) jeweils drehfest mit der Torsionsfeder (14) verbunden sind, und die dritte Zahnwelle (13) gegenüber der Torsionsfeder (14) drehbar angeordnet ist.

4. Kupplungsanordnung nach einem der vorhergehenden Ansprüche, **dadurch gekennzeichnet, dass** die dritte Zahnwelle (13) innen hohl ist, und sich die Torsionsfeder (14) durch die dritte Zahnwelle (13) hindurch erstreckt.

5. Kupplungsanordnung (1) nach einem der vorangehenden Ansprüchen umfassend
- eine erste Welle (3), vorzugsweise eine Kurbelwelle eines Verbrennungsmotors (2),
- eine zur ersten Welle (3) koaxial angeordnete zweite Welle (7), vorzugsweise eine Ankerwelle einer elektrischen Maschine (6), und
- eine Kupplung (10) zum spielfreien Verbinden der ersten Welle (3) mit der zweiten Welle (7),
- wobei entsprechend der beiden koaxialen Wellen (3, 7) eine Rotationsachse (17) definiert ist, um die Rotationsachse (17) eine Umfangsrichtung (18) definiert ist, und senkrecht zur Rotationsachse (17) eine Radialrichtung (19) definiert ist,
- wobei die Kupplung (10) zumindest ein Bewegungselement (14, 31, 32, 43) und zumindest ein gegenüber den beiden Wellen (3, 7) in Umfangsrichtung (18) und/oder in Radialrichtung (19) bewegliches Kupplungselement (11, 29, 41) umfasst, und
- wobei das Bewegungselement (14, 31, 32, 43) dazu ausgebildet ist, um das Kupplungselement (11, 29, 41) in Umfangsrichtung (18) und/oder Radialrichtung (19) spielfreie an die erste und/oder zweite Welle (3, 7) anzudrücken, um ein Spiel in Umfangsrichtung (18) zwischen den beiden Wellen (3, 7) auszugleichen,
**dadurch gekennzeichnet, dass**
die Kupplung (10) als Kreuzscheibenkupplung ausgebildet ist und einen rotierenden Grundkörper (24) umfasst,
- wobei die beiden Wellen (3, 7) jeweils eine Nut (25, 26) aufweisen, und der Grundkörper (24) mit den Fortsätzen (27, 28) in den Nuten (25, 26) steckt,
- wobei zumindest ein Kupplungselement durch einen Kolben (29) gebildet ist, der im Grundkörper (24) in Radialrichtung (19) beweglich gelagert ist, und
- wobei das Bewegungselement den Kolben (29) vom Grundkörper (24) weg drückt, sodass der Kolben (29) an der ersten oder zweiten Welle (3, 7) anliegt.

6. Kupplungsanordnung nach Anspruch 5, **dadurch gekennzeichnet, dass** auf der der ersten Welle (3) zugewandten Seite und auf der der zweiten Welle (7) zugewandten Seite des Grundkörpers (24) jeweils mehrere in Radialrichtung (19) bewegliche Kolben (29) angeordnet sind.

7. Kupplungsanordnung nach einem der vorhergehenden Ansprüche, **dadurch gekennzeichnet, dass** das Bewegungselement eine Feder (14, 32, 43) und/oder eine Hydraulikdruckkammer (31) ist.

8. Verfahren zur Montage einer Kupplungsanordnung (1) nach einem der Ansprüche 1 bis 4, umfassend die folgenden Schritte:
- Spannen der Torsionsfeder (14) durch Verdrehen der ersten Zahnwelle (11) gegenüber der zweiten Zahnwelle (12),
- Einsetzen einer ersten Verdrehsicherung (15), die die erste Zahnwelle (11) gegenüber der dritten Zahnwelle (13) fixiert und einer zweiten Verdrehsicherung (15), die die zweite Zahnwelle (12) gegenüber der dritten Zahnwelle (13) fixiert,
- Montieren der ersten Zahnwelle (11) an der ersten Welle (3) und der zweiten Zahnwelle (12) an der zweiten Welle (7), und
- Lösen der beiden Verdrehsicherungen (15).

9. Verfahren nach Anspruch 8, **dadurch gekennzeichnet, dass** als erste Verdrehsicherung (15) eine erste Manschette aufgeschoben wird, die zum Fixieren gleichzeitig in die Verzahnung der ersten Zahnwelle (11) und der dritten Zahnwelle (13) eingreift, und/oder dass als zweite Verdrehsicherung (15) eine zweite Manschette aufgeschoben wird, die zum Fixieren gleichzeitig in die Verzahnung der zweiten Zahnwelle (12) und der dritten Zahnwelle (13) eingreift.

10. Verfahren nach Anspruch 9, **dadurch gekennzeichnet, dass** die erste Manschette beim Montieren der ersten Zahnwelle (11) an der ersten Welle (3) vollständig auf die dritte Zahnwelle (13) aufgeschoben wird, und/oder dass die zweite Manschette beim Montieren der zweiten Zahnwelle (12) an der zweiten Welle (7) vollständig auf die dritte Zahnwelle (13) aufgeschoben wird.

11. Verfahren nach einem der Ansprüche 8 bis 10, **dadurch gekennzeichnet, dass** als erste Verdrehsicherung (15) zumindest ein erster Pin (21) eingeschoben wird, der zum Fixieren gleichzeitig in der ersten Zahnwelle (11) und in der dritten Zahnwelle (13) steckt, und/oder dass als zweite Verdrehsicherung (15) zumindest ein zweiter Pin (21) eingeschoben wird, der zum Fixieren gleichzeitig in der zweiten Zahnwelle (12) und in der dritten Zahnwelle (13) steckt.

12. Verfahren nach Anspruch 11, **dadurch gekennzeichnet, dass** der zumindest eine erste Pin (21) beim Montieren der ersten Zahnwelle (11) an der ersten Welle (3) vollständig in die dritte Zahnwelle (13) eingeschoben wird, und/oder dass der zumindest eine zweite Pin (21) beim Montieren der zweiten Zahnwelle (12) an der zweiten Welle (7) vollständig in die dritte Zahnwelle (13) eingeschoben wird.

## Claims

1. A coupling arrangement (1) comprising
- a first shaft (3), preferably a crankshaft of an internal combustion engine (2),
- a second shaft (7) arranged coaxially with the first shaft (3), preferably an armature shaft of an electric machine (6), and
- a coupling (10) for play-free connection of the first shaft (3) to the second shaft (7),
- wherein an axis of rotation (17) is defined corresponding to the two coaxial shafts (3, 7), a peripheral direction (18) is defined about the axis of rotation (17), and a radial direction (19) is defined perpendicularly to the axis of rotation (17),
- wherein the coupling (10) comprises at least one movement element (14, 31, 32, 43), and at least one coupling element (11, 29, 41) which is movable relative to the two shafts (3, 7) in the peripheral direction (18) and/or in the radial direction (19), and
- wherein the movement element (14, 31, 32, 43) is designed to press the coupling element (11, 29, 41) in the peripheral direction (18) and/or radial direction (19) without play against the first and/or second shaft (3, 7), in order to compensate for play in the peripheral direction (18) between the two shafts (3, 7),
**characterised in that**
the coupling (10) comprises as coupling elements a first splined shaft (11), a second splined shaft (12) and a third splined shaft (13) which is arranged between the first splined shaft (11) and the second splined shaft (12), the three splined shafts (11 - 13) being arranged coaxially with the axis of rotation (17), the first splined shaft (11) being connected to the second splined shaft (12) by way of a torsion spring (14).

2. A coupling arrangement according to Claim 1, **characterised in that**
- the first shaft (3) comprises first shaft splines, and
- the second shaft (7) comprises second shaft splines,
- the first shaft splines being engaged with the first splined shaft (11) and simultaneously with the third splined shaft (13), and
- the second shaft splines being engaged with the second splined shaft (12) and simultaneously with the third splined shaft (13).

3. A coupling arrangement according to one of Claims 1 or 2, **characterised in that** the first splined shaft (11) and the second splined shaft (12) are connected in each case non-rotatably to the torsion spring (14), and the third splined shaft (13) is arranged rotatably relative to the torsion spring (14).

4. A coupling arrangement according to one of the preceding claims, **characterised in that** the third splined shaft (13) is internally hollow, and the torsion spring (14) extends through the third splined shaft (13).

5. A coupling arrangement (1) according to one of the preceding claims, comprising
- a first shaft (3), preferably a crankshaft of an internal combustion engine (2),
- a second shaft (7) arranged coaxially with the first shaft (3), preferably an armature shaft of an electric machine (6), and
- a coupling (10) for play-free connection of the first shaft (3) to the second shaft (7),
- wherein an axis of rotation (17) is defined corresponding to the two coaxial shafts (3, 7), a peripheral direction (18) is defined about the axis of rotation (17), and a radial direction (19) is defined perpendicularly to the axis of rotation (17),
- wherein the coupling (10) comprises at least one movement element (14, 31, 32, 43), and at least one coupling element (11, 29, 41) which is movable relative to the two shafts (3, 7) in the peripheral direction (18) and/or in the radial direction (19), and
- wherein the movement element (14, 31, 32, 43) is designed to press the coupling element (11, 29, 41) in the peripheral direction (18) and/or radial direction (19) without play against the first and/or second shaft (3, 7), in order to compensate for play in the peripheral direction (18) between the two shafts (3, 7),
**characterised in that**
the coupling (10) is designed as an Oldham coupling and comprises a rotating basic body (24),
- the two shafts (3, 7) in each case having a groove (25, 26), and the basic body (24) engaging with the extensions (27, 28) in the grooves (25, 26),
- at least one coupling element being formed by a piston (29) which is mounted in the basic body (24) so as to be movable in the radial direction (19), and
- the movement element pressing the piston (29) away from the basic body (24), so that the piston (29) lies against the first or second shaft (3, 7).

6. A coupling arrangement according to Claim 5, **characterised in that** in each case a plurality of pistons (29) which are movable in the radial direction (19) are arranged on the side of the basic body (24) which faces the first shaft (3) and on the side of the basic body which faces the second shaft (7).

7. A coupling arrangement according to one of the preceding claims, **characterised in that** the movement element is a spring (14, 32,43) and/or a hydraulic pressure chamber (31).

8. A method for mounting a coupling arrangement (1) according to one of Claims 1 to 4, comprising the following steps:
- tensioning the torsion spring (14) by twisting the first splined shaft (11) relative to the second splined shaft (12),
- inserting a first anti-twist means (15) which fixes the first splined shaft (11) relative to the third splined shaft (13), and a second anti-twist means (15) which fixes the second splined shaft (12) relative to the third splined shaft (13),
- mounting the first splined shaft (11) on the first shaft (3), and the second splined shaft (12) on the second shaft (7), and
- releasing the two anti-twist means (15).

9. A method according to Claim 8, **characterised in that** as the first anti-twist means (15) a first collar is pushed on which for fixing purposes engages simultaneously in the toothing of the first splined shaft (11) and of the third splined shaft (13), and/or **in that** as second anti-twist means (15) a second collar is pushed on which for fixing purposes engages simultaneously in the toothing of the second splined shaft (12) and of the third splined shaft (13).

10. A method according to Claim 9, **characterised in that** the first collar upon the mounting of the first splined shaft (11) on the first shaft (3) is pushed fully onto the third splined shaft (13), and/or **in that** the second collar upon the mounting of the second splined shaft (12) on the second shaft (7) is pushed fully onto the third splined shaft (13).

11. A method according to one of Claims 8 to 10, **characterised in that** as first anti-twist means (15) at least one first pin (21) is pushed in which for fixing purposes engages simultaneously in the first splined shaft (11) and in the third splined shaft (13), and/or **in that** as second anti-twist means (15) at least one second pin (21) is pushed in which for fixing purposes engages simultaneously in the second splined shaft (12) and in the third splined shaft (13).

12. A method according to Claim 11, **characterised in that** the at least one first pin (21) upon the mounting of the first splined shaft (11) on the first shaft (3) is pushed fully into the third splined shaft (13), and/or **in that** the at least one second pin (21) upon the mounting of the second splined shaft (12) on the second shaft (7) is pushed fully into the third splined shaft (13).

## Revendications

1. Dispositif d'embrayage (1) comprenant :
- un premier arbre (3), de préférence le vilebrequin d'un moteur à combustion interne (2),
- un second arbre (7) monté coaxialement au premier arbre (3) en particulier l'arbre d'induit d'une machine électrique (6), et
- un embrayage (10) permettant de relier sans jeu le premier arbre (3) avec la second arbre (7),
- un axe de rotation (17) étant défini par les deux arbres coaxiaux (3, 7) autour de l'axe de rotation (17) une direction périphérique (18) étant définie et perpendiculairement à l'axe de rotation (17) une direction radiale (19) étant définie,
- l'embrayage (10) comprenant au moins un élément de déplacement (14, 31, 32, 43), et au moins un élément d'embrayage (11, 29, 41) mobile par rapport aux deux arbres (3, 7) dans la direction périphérique (18) et/ou dans la direction radiale (19), et
- l'élément de déplacement (14, 31, 32, 43) étant réalisé pour permettre de serrer l'élément d'embrayage (11, 29, 41) dans la direction périphérique (18) et/ou dans la direction radiale (19) sans jeu contre le premier arbre et/ou contre le second arbre (3, 7), pour compenser le jeu en direction périphérique (18) entre les deux arbres (3, 7),
**caractérisé en ce que**
l'embrayage (10) comporte en tant qu'élément d'embrayage un premier arbre cannelé (11), un second arbre cannelé (12) et un troisième arbre cannelé (13) monté entre le premier arbre cannelé (11) et le second arbre cannelé (12), les trois arbres cannelés (11, 13) étant montés coaxialement à l'axe de rotation (17) et le premier arbre cannelé (11) étant relié au second arbre cannelé (12) par l'intermédiaire d'un ressort de torsion (14).

2. Dispositif d'embrayage conforme à la revendication 1,
**caractérisé en ce que**
- le premier arbre (3) comporte une première cannelure d'arbre, et
- le second arbre (7) comporte une seconde cannelure d'arbre,
- la première cannelure d'arbre vient en prise avec le premier arbre cannelé (11) et simultanément avec le troisième arbre cannelé (13),
- la seconde cannelure d'arbre vient en prise avec le second arbre cannelé (12) et simultanément avec le troisième arbre cannelé (13).

3. Dispositif d'embrayage conforme à l'une des revendications 1 et 2,
**caractérisé en ce que**
le premier arbre cannelé (11) et le second arbre cannelé (12) sont respectivement reliés solidairement en rotation avec le ressort de torsion (14) et le troisième arbre cannelé (13) est monté mobile en rotation par rapport au ressort de torsion (14).

4. Dispositif d'embrayage conforme à l'une des revendications précédentes,
**caractérisé en ce que**
le troisième arbre cannelé (13) est creux et le ressort de torsion (14) s'étend au travers du troisième arbre cannelé (13).

5. Dispositif d'embrayage (1) conforme à l'une des revendications précédentes comprenant :
- un premier arbre (3) de préférence le vilebrequin d'un moteur à combustion interne (2),
- un second arbre (7) monté coaxialement au premier arbre (3), de préférence l'arbre d'induit d'une machine électrique (6), et
- un embrayage (10) permettant de relier sans jeu le premier arbre (3) et le second arbre (7),
- dans lequel un axe de rotation (17) est défini par les deux arbres coaxiaux (3, 7), une direction périphérique (18) est définie autour de l'axe de rotation (17) et une direction axiale (19) est définie perpendiculairement à l'axe de rotation (17),
- l'embrayage (10) comprenant au moins un élément de déplacement (14, 31, 32, 33) et au moins un élément d'embrayage (11, 29, 41) mobile par rapport aux deux arbres (3, 7) dans la direction périphérique (18) et/ou dans la direction radiale (19), et
- l'élément de déplacement (14, 31, 32, 43) étant réalisé pour permettre de serrer l'élément d'embrayage (11, 29, 41) dans la direction périphérique (18) et/ou dans la direction radiale (19), sans jeu, contre le premier arbre et/ou contre le second arbre (3, 7) pour permettre de compenser un jeu dans la direction périphérique (18) entre les deux arbres (3, 7),
**caractérisé en ce que**
l'embrayage (10) est réalisé sous la forme d'un embrayage à joint de Oldham et comporte corps de base rotatif (24),
- les deux arbres (3, 7) comprennent respectivement une rainure (25, 26) et le corps de base (24) s'enfiche par des prolongements (27, 28) dans les rainures (25, 26),
- au moins un élément d'embrayage est formé par un piston (29) qui est monté mobile en direction radiale (19) dans le corps de base (24),
- l'élément de déplacement sollicite le piston (29) pour l'éloigner du corps de base (24), de sorte qu'il s'applique contre le premier arbre ou contre le second arbre (3, 7).

6. Dispositif d'embrayage conforme à la revendication 5,
**caractérisé en ce que**
sur la face du corps de base (24) tournée vers le premier arbre (3) et sur la face du corps de base (24) tournée vers le second arbre (7) sont respectivement montés plusieurs pistons (29) mobiles dans la direction radiale (19).

7. Dispositif d'embrayage conforme à l'une des revendications précédentes,
**caractérisé en ce que**
l'élément de déplacement est un rotor (14, 32, 43) et/ou une chambre de pression hydraulique (31).

8. Procédé de montage d'un dispositif d'embrayage (1) conforme à l'une des revendications 1 à 4,
comprenant les étapes suivantes consistant à :
- tendre le ressort de torsion (14) par rotation du premier arbre cannelé (11) par rapport au second arbre cannelé (12),
- introduire une première protection anti-rotation (15) qui fixe le premier arbre cannelé (11) par rapport au troisième arbre cannelé (13) et une seconde protection anti-rotation (15) qui fixe le second arbre cannelé (12) par rapport au troisième arbre cannelé (13),
- monter le premier arbre cannelé (11) sur le premier arbre (3) et le second arbre cannelé (12) sur le second arbre (7), et
- dégager les deux protections anti-rotation (15).

9. Procédé conforme à la revendication 8,
**caractérisé en ce qu'**
en tant que première protection anti-rotation (15) on fait glisser un premier manchon qui pour permettre la fixation vient en prise simultanément dans la cannelure du premier arbre cannelé (11) et dans la denture du troisième arbre cannelé (13), et/ou en tant que seconde protection anti-rotation (15) on fait glisser un second manchon qui, pour permettre la fixation vient simultanément en prise dans la cannelure du second arbre cannelé (12) et dans la cannelure du troisième arbre cannelé (13).

10. Procédé conforme à la revendication 9,
**caractérisé en ce que**
lors du montage du premier arbre cannelé (11) sur le premier arbre (3) le premier manchon est totalement glissé sur le troisième arbre cannelé (13), et/ou lors du montage du second arbre cannelé (12) sur le second arbre (7) le second manchon est totalement glissé sur le troisième arbre cannelé (13).

11. Procédé conforme à l'une des revendications 8 à 10,
**caractérisé en ce qu'**
en tant que première protection anti-rotation (15) on insère au moins une première broche (21) qui pour permettre la fixation s'enfiche simultanément dans le premier arbre cannelé (11) et dans le troisième arbre cannelé (13), et/ou en tant que seconde protection anti-rotation (15) on insère au moins une seconde broche (21) qui, pour permettre la fixation s'enfiche simultanément dans le second arbre cannelé (12), et dans le troisième arbre cannelé (13).

12. Procédé conforme à la revendication 11,
**caractérisé en ce que**
lors du montage du premier arbre cannelé (11) sur le premier arbre (3) la première broche (21) est totalement insérée dans le troisième arbre cannelé (13) et/ou lors du montage du second arbre cannelé (12) sur le second arbre (7) la seconde broche (21) est totalement insérée dans le troisième arbre cannelé (13).
